# EUROPÄISCHE PATENTANMELDUNG

(11) **EP 2 057 893 A2**
(43) Veröffentlichungstag der Anmeldung: **13.05.2009**
(21) Anmeldenummer: 08019177.8
(22) Anmeldetag: 03.11.2008
(51) Int. Cl.: A01G 3/08

(54) **Schneidvorrichtung zum Schneiden von Pflanzen**

(30) Priorität: 08.11.2007 DE 102007053646
(71) Anmelder: Binger Seilzug GmbH & Co KG, 55411 Bingen (DE)
(72) Erfinder:
(74) Vertreter: Lemcke, Brommer & Partner

(57) **Zusammenfassung**

Eine Schneidvorrichtung (1) zum Schneiden von Pflanzen, insbesondere zum Vorschnitt von Reben in Drahtrahmenanlagen mit Kordon- oder Guyoterziehung, umfasst mindestens eine Antriebseinheit, einen Tragrahmen (3) und mindestens ein Paar von Schneidscheiben (5a, 5b) mit einer ersten und einer zweiten Schneidscheibe, wobei die Schneidscheiben (5a, 5b) derart drehbar an dem Tragrahmen (3) angeordnet sind, dass die Drehachsen der beiden Schneidscheiben (5a, 5b) in etwa parallel sind, und wobei die Antriebseinheit mit den Schneidscheiben (5a, 5b) derart in Wirkverbindung steht, dass die Schneidscheiben (5a, 5b) mittels der Antriebseinheit drehbar sind. Wesentlich ist dabei, dass Umfang und/oder Drehgeschwindigkeit der beiden Schneidscheiben (5a, 5b) derart gewählt sind, dass die erste Schneidscheibe (5a) eine unterschiedliche Umfangsgeschwindigkeit zur Umfangsgeschwindigkeit der zweiten Schneidscheibe (5b) aufweist.

## Beschreibung

Die Erfindung betrifft eine Schneidvorrichtung zum Schneiden von Pflanzen, insbesondere zum Vorschnitt von Reben in Drahtrahmenanlagen mit Kordon-oder auch Guyoterziehung gemäß Oberbegriff des Anspruchs 1.

Schneidvorrichtungen haben vielerlei Anwendungsgebiete bei der Pflanzenpflege, ein typisches Anwendungsgebiet ist der Winterschnitt von Reben in Drahtrahmenanlagen mit Kordonerziehung oder auch das Freischneiden des oberen Drahtes in Guyot-Anlagen.

Bei solchen Reben wird beispielsweise im Herbst und im Winter ein Schneidvorgang durchgeführt, bei dem typischerweise die Reben maschinell vorgeschnitten und später per Hand nachgeschnitten werden. Für den Vorschnitt sind Schneidvorrichtungen bekannt, welche eine Antriebseinheit und mindestens ein Paar von Schneidscheiben mit einer ersten und einer zweiten Schneidscheibe umfassen. Die Schneidscheiben sind drehbar an einem Tragrahmen angeordnet und werden von der Antriebseinheit in Drehung versetzt. Der Tragrahmen weist eine Befestigung auf, mittels derer er an einem Traktor angebracht werden kann, und die Schneidscheiben sind derart an dem Tragrahmen angeordnet, dass bei an dem Traktor angebrachter Schneidvorrichtung die Drehachsen der Schneidscheiben parallel sind und etwa senkrecht zum Boden stehen.

Mittels des Traktors wird die Schneidvorrichtung an einer Rebenzeile entlanggeführt, wobei die erste Schneidscheibe auf der einen und die zweite Schneidscheibe sich auf der gegenüberliegenden Seite der Rebe befindet. Die Schneidscheiben sind mit geringem Höhenversatz etwas überlappend angeordnet, sodass die Reben zwischen die Schneidscheiben gedrückt und von diesen abgeschert werden.

Der vorliegenden Erfindung liegt die Aufgabe zugrunde, die bekannte Schneidvorrichtung dahingehend fortzubilden, dass die Schneidwirkung verbessert wird, eine geringere Verletzung der Pflanzen an der Schnittfläche auftritt sowie die Entsorgung der abgeschnittenen Rebenteile und die Handhabung der Schneidvorrichtung verbessert wird.

Gelöst ist diese Aufgabe durch eine Schneidvorrichtung gemäß Anspruch 1. Vorteilhafte Ausführungsformen der erfindungsgemäßen Schneidvorrichtung finden sich in den Ansprüchen 2 bis 15.

Die erfindungsgemäße Schneidvorrichtung umfasst somit mindestens eine Antriebseinheit, einen Tragrahmen und mindestens ein Paar von Schneidscheiben mit einer ersten und einer zweiten Schneidscheibe. Die Schneidscheiben sind derart drehbar an dem Tragrahmen angeordnet, dass die Drehachsen der beiden Schneidscheiben in etwa parallel sind. Die Antriebseinheit steht mit den Schneidscheiben in Wirkverbindung, sodass die Schneidscheiben mittels der Antriebseinheit drehbar sind.

Wesentlich ist, dass Umfang und/oder Drehgeschwindigkeit der beiden Schneidscheiben derart gewählt sind, dass die erste Schneidscheibe eine unterschiedliche Umfangsgeschwindigkeit zur Umfangsgeschwindigkeit der zweiten Schneidscheibe aufweist. Der Kerngedanke der Erfindung liegt somit darin, dass die beiden Schneidscheiben eine unterschiedliche Umfangsgeschwindigkeit aufweisen. Dies kann beispielsweise dadurch realisiert sein, dass beide Schneidscheiben mit gleicher Drehgeschwindigkeit gedreht werden, jedoch unterschiedliche Durchmesser aufweisen oder dass beide Schneidscheiben mit unterschiedlicher Drehgeschwindigkeit gedreht werden und identische Durchmesser aufweisen, oder durch eine Kombination hiervon.

Insbesondere ist es jedoch vorteilhaft, dass bei der erfindungsgemäßen Schneidvorrichtung die Schneidscheiben mit unterschiedlichen Drehgeschwindigkeiten gedreht werden, d. h. die Antriebseinheit ist derart mit den Schneidscheiben zusammenwirkend ausgestaltet, dass die erste Schneidscheibe mit einer ersten Drehgeschwindigkeit und die zweite Schneidscheibe mit einer zweiten Drehgeschwindigkeit drehbar ist, wobei die erste und die zweite Drehgeschwindigkeit unterschiedlich sind.

Im Sinne dieser Anmeldung ist mit Drehgeschwindigkeit immer der Betrag einer Drehgeschwindigkeit gemeint, d. h. die Drehrichtung wird bei den Aussagen über die Drehgeschwindigkeit nicht berücksichtigt und Drehgeschwindigkeiten können durch positive Zahlen beziffert werden, unabhängig von der Drehrichtung.

Bei der erfindungsgemäßen Schneidvorrichtung dreht sich somit eine Schneidscheibe mit einer höheren Drehgeschwindigkeit als die andere Schneidscheibe. Dies führt dazu, dass in dem Bereich, in dem die Pflanzen zwischen den Schneidscheiben abgeschnitten oder abgeschert werden, eine Relativbewegung zwischen erster und zweiter Drehscheibe vorliegt. Hierdurch ergibt sich eine verbesserte Schneid- bzw. Abscherwirkung, da durch die Relativbewegung zwischen erster und zweiter Schneidscheibe ein effizienteres Abtrennen der Pflanzen erfolgt. Im Ergebnis wird die Schneidwirkung erhöht, d. h. es kann ein höherer Schneiddurchsatz erzielt werden und darüber hinaus ergibt sich eine glättere Schnittfläche und weniger Verletzung der Pflanzen im Schnittbereich durch Ausfasern oder ähnliche Zerstörungen, sodass ein schonenderer Schneidvorgang vorliegt.

Darüber hinaus werden die abgeschnittenen Pflanzenteile von der sich schneller drehenden Schneidscheibe mitgerissen, sodass die Pflanzenteile hauptsächlich in eine Richtung ausgegeben werden. Beim Stand der Technik mit sich gleichschnell drehenden Schneidscheiben werden die abgeschnittenen Pflanzenteile gleichmäßig homogen ausgegeben.

Untersuchungen der Anmelderin haben gezeigt, dass die zweite Drehgeschwindigkeit vorteilhafterweise mindestens um einen Faktor 1,5, insbesondere mindestens um einen Faktor 2, im Weiteren insbesondere mindestens um einen Faktor 3 größer als die erste Drehgeschwindigkeit ist.

Typischerweise drehen sich die Schneidscheiben gegenläufig zueinander. Weiterhin wird die Schneidvorrichtung bei Benutzung typischerweise an der Pflanze entlanggeführt, beispielsweise entlang der Tragrahmenanlage der Reben. Vorteilhafterweise werden die Schneidscheiben derart gedreht, dass sie sich gegenläufig drehen und an dem Berührungspunkt mit der Pflanze, an dem diese abgeschnitten wird, die Drehrichtung der Schneidscheiben entgegengesetzt zur Führungsrichtung der Schneidvorrichtung ist.

Weiterhin ist es vorteilhaft, wenn sich die Schneidscheiben eines Paares überlappen. Hierzu sind die Schneidscheiben eines Paares in Richtung der Drehachsen zueinander höhenversetzt angeordnet, sodass in Draufsicht von oben, d.h. in Richtung der Drehachsen eine Überlappung der Schneidscheiben möglich ist.

In einer vorteilhaften Ausführungsform umfasst die Antriebseinheit einen Hydraulikmotor und ein Getriebe. Der Hydraulikmotor steht mit beiden Schneidscheiben des Paares von Schneidscheiben in Wirkverbindung. Das Getriebe ist zwischen Hydraulikmotor und einer der beiden Schneidscheiben zwischengeschaltet, sodass mittels des Getriebes diese Schneidscheibe mit einer unterschiedlichen Drehgeschwindigkeit drehbar ist, verglichen zu der Drehgeschwindigkeit der anderen Schneidscheibe.

Insbesondere ist es jedoch vorteilhaft, dass die Antriebseinheit mindestens zwei Hydraulikmotoren umfasst, wobei ein erster Hydraulikmotor mit der ersten Schneidscheibe und ein zweiter Hydraulikmotor mit der zweiten Schneidscheibe in Verbindung steht. Hierdurch können die Hydraulikmotoren auf die für die jeweilige Schneidscheibe gewünschte Drehgeschwindigkeit optimiert werden.

In einer weiteren vorteilhaften Ausführungsform umfasst die Schneidvorrichtung mindestens ein zweites Paar Schneidscheiben mit einer dritten und einer vierten Schneidscheibe, welche drehbar an dem Tragrahmen angeordnet sind, sodass einerseits die Drehachsen der ersten und der dritten Schneidscheibe und andererseits die Drehachsen der zweiten und der vierten Schneidscheibe jeweils in etwa identisch sind.

Vorteilhafterweise weist die Schneidvorrichtung zwei Wellen auf, welche parallel zueinander und drehbar an dem Tragrahmen angeordnet sind. Die erste und die dritte Schneidscheibe sind hierbei an einer ersten Welle angeordnet, und die zweite und die vierte Schneidscheibe sind an einer zweiten Welle angeordnet. Die Antriebseinheit steht mit den Wellen derart in Verbindung, dass die Wellen durch die Antriebseinheit drehbar sind und die erste Welle eine zu der zweiten Welle unterschiedliche Drehgeschwindigkeit aufweist.

Vorteilhafterweise umfasst die Schneidvorrichtung weiterhin einen Mast, eine Hubvorrichtung und eine Befestigungsvorrichtung, wobei die Befestigungsvorrichtung an ein Fahrzeug anbringbar ist. Typischweise wird die erfindungsgemäße Schneidvorrichtung in Verbindung mit einem Traktor oder einem Geräteträger verwendet, sodass vorteilhafterweise die Befestigungsvorrichtung einen bei in der Landwirtschaft verwendeten Traktoren standardisierten Anschluss aufweist. Der Mast ist mit der Befestigungsvorrichtung verbunden, und der Tragrahmen ist derart an dem Mast befestigt, dass der Tragrahmen mittels der Hubvorrichtung relativ zur Befestigungsvorrichtung hoch- und herunterfahrbar ist.

Hierdurch ist es möglich, bei an einem Fahrzeug angeordneter Schneidvorrichtung diese mittels der Hubvorrichtungen wahlweise in verschiedenen Höhen anzuordnen, sodass die Schnitthöhe in einfacher Weise durch die Hubvorrichtung vorgebbar ist.

Vorteilhafterweise sind bei der zuvor beschriebenen vorteilhaften Ausführungsform die Schneidscheiben derart an dem Tragrahmen angeordnet, dass bei an einem Fahrzeug angeordneter Befestigungsvorrichtung die Drehachsen der Schneidscheiben in etwa in einer Ebene liegen, welche senkrecht zum Geradeauslauf des Fahrzeugs steht. Hierdurch kann mit dem Fahrzeug beispielsweise an einer Rebenzeile entlanggefahren werden, wobei eine Schneidscheibe eines gegebenen Scheidscheibenpaares auf der einen und die andere Schneidscheibe des gegebenen Scheidscheibenpaares auf der gegenüberliegenden Seite der Rebenzeile angeordnet ist.

Insbesondere ist es vorteilhaft, wenn die Schneidscheibe, welche näher an dem Fahrzeug angeordnet ist, eine geringere Drehgeschwindigkeit aufweist, als die andere, weiter vom Fahrzeug entfernte Schneidscheibe. Denn wie zuvor beschrieben, werden aufgrund der unterschiedlichen Drehgeschwindigkeiten der Schneidscheiben die abgeschnittenen Pflanzenteile überwiegend in Richtung der sich schneller drehenden Drehscheibe angelenkt. In der beschriebenen vorteilhaften Ausführungsform werden die abgeschnittenen Pflanzenteile somit überwiegend in den Bereich der Rebenzeile abgelenkt, welche von dem Fahrzeug abgewandt ist. Hierdurch wird eine Beeinträchtigung der Sicht durch die abgeschnittenen Rebenteile und eine Beeinträchtigung der Funktionsweise des Fahrzeuges oder des Tragrahmens der Schneidvorrichtung durch die abgeschnittenen Pflanzenteile vermieden.

Insbesondere ist es vorteilhaft, wenn die Schneidscheibe, welche näher an dem Fahrzeug angeordnet ist, eine solche Drehgeschwindigkeit besitzt, dass die Umfangsgeschwindigkeit dieser Schneidscheibe in etwa der Fahrgeschwindigkeit des Fahrzeugs entspricht. Hierdurch wird erreicht, dass bei der Schneidscheibe mit geringerer Drehgeschwindigkeit bezüglich des Bezugssystems der Pflanze sich Fahrgeschwindigkeit und Umfangsgeschwindigkeit im Wesentlichen aufheben, sodass von der Pflanze aus betrachtet durch die Schneidscheibe mit geringerer Drehgeschwindigkeit lediglich ein Andrücken an die Schneidscheibe mit höherer Drehgeschwindigkeit erfolgt. Das Abschneiden oder Abscheren der Pflanze erfolgt im Bezugssystem der Pflanze also dadurch, dass die Schneidscheibe mit höherer Drehgeschwindigkeit, welche auch in Bezugssystem der Pflanze eine Relativgeschwindigkeit > 0 zu der Pflanze aufweist, das Abschneiden oder Abscheren der Pflanze bewirkt.

Eine weitere Erhöhung und Verbesserung der Schneidwirkung kann durch eine vorteilhafte Ausgestaltung der Schneidscheiben selbst erzielt werden: Bisher ist es bekannt, Schneidscheiben mit kreisförmigem Umfang zu verwenden, bei denen ein Abscheren der Pflanze durch ein Abdrücken zwischen den sich überlappenden Schneidscheiben stattfindet.

Vorteilhafterweise weist die erste und die zweite Schneidscheibe hingegen an ihrem Umfang Schneidzähne auf. Diese Schneidzähne bewirken bei der Drehbewirkung ein Abschneiden oder Abschlagen der Pflanzenteile, sodass ein effizienterer und schonenderer Schnittvorgang stattfindet.

Insbesondere ist es vorteilhaft, dass die Schneidzähne der Schneidscheiben asymmetrisch ausgebildet sind. Hierzu weist jeder Schneidzahn eine erste Flanke mit einem flachen Anstiegswinkel und eine zweite Flanke mit einem demgegenüber steileren Anstiegswinkel auf, wobei die Anstiegswinkel jeweils bezogen auf eine gedachte Linie entlang eines Radius oder Halbmessers der Schneidscheiben definiert sind.

Vorteilhafterweise ist die Schneidscheibe, welche sich mit der höheren Drehgeschwindigkeit dreht, derart an dem Tragrahmen angeordnet, dass bei jedem Schneidzahn die Flanke mit dem steileren Anstiegswinkel in Drehrichtung liegt und die Flanke mit dem flachen Anstiegswinkel entgegengesetzt zur Drehrichtung liegt.

Weiterhin ist es vorteilhaft, wenn die Schneidscheibe, welche sich mit der geringeren Drehgeschwindigkeit dreht, umgekehrt an dem Tragrahmen angeordnet ist, d. h., dass bei jedem Schneidzahn die Flanke mit dem flachen Anstiegswinkel in Drehrichtung liegt und die Flanke mit dem steileren Anstiegswinkel entgegengesetzt zur Drehrichtung liegt.

Dies hat zur Folge, dass ein Pflanzenteil, wie beispielsweise der Ast einer Rebe, durch die Flanke mit dem steilen Anstiegswinkel des Schneidzahns über die gesamte Dicke des Astes abgeschlagen oder abgeschnitten wird. Würde man hingegen die Flanke mit dem flachen Anstiegswinkel in Drehrichtung anordnen, so würde anstelle eines Abschlagens oder Abschneidens vermehrt ein Zerquetschen der Pflanze zwischen den beiden Drehscheiben stattfinden, was ein weniger effizienten Schnittvorgang dargestellt und zudem zu größeren Verletzungen bei der Pflanze führen kann.

Die Bezeichnung steiler Anstiegswinkel bzw. steile Flanke und flacher Anstiegswinkel bzw. flache Flanke beziehen sich auf den Winkel, in dem die Flanke des Schneidzahns auf dem zu schneidenden Pflanzenteil auftrifft. Untersuchungen der Anmelderin haben ergeben, dass die steilere Flanke jedes Schneidzahnes vorteilhafterweise einen Winkel von 15° bis 25° gegenüber der bereits erwähnten gedachten Linie aufweist. Die gedachte Linie verläuft nach Art eines Radius oder Halbmessers durch den Mittelpunkt der Schneidscheibe und die äußere Spitze des jeweils betrachteten Schneidezahnes.

Insbesondere ist ein Winkel von etwa 22° vorteilhaft. Auf diese Weise ist ein steiler Anstiegswinkel gegeben, der zu einem effizienten Schnittvorgang mit einer sauberen Schnittfläche führt. Gleichzeitig wird jedoch verhindert, dass beispielsweise Draht eines Rahmengestells für Weinreben sich in dem Schneidzahn verfängt und Beschädigungen an der Schneidscheibe oder dem Draht auftreten könnten.

Ebenso ergaben Untersuchungen der Anmelderin, dass vorteilhafterweise die flache Flanke jedes Schneidzahnes einen Winkel von 40° bis 50° gegenüber der bereits zuvor beschriebenen gedachten Linie aufweist. Insbesondere ist es vorteilhaft, wenn dieser Winkel etwa 45° beträgt.

Weitere vorteilhafte Ausgestaltungen der erfindungsgemäßen Schneidvorrichtung werden im Folgenden anhand eines Ausführungsbeispiels und den Figuren erläutert. Dabei zeigt:

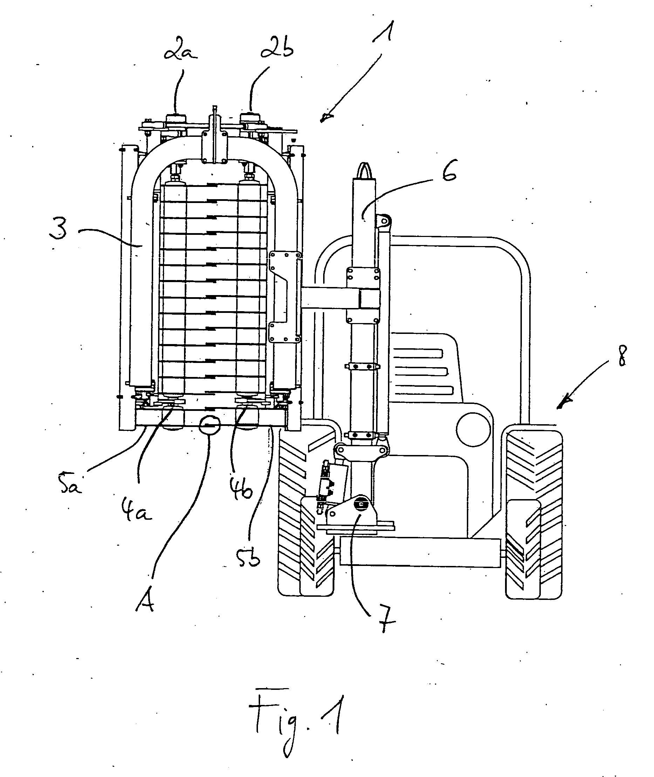

- Figur 1: eine Vorderansicht eines Traktors mit angebrachter erfindungsgemäßer Schneidvorrichtung in schematischer Darstellung und
- Figur: 2 eine Draufsicht von oben auf das unterste Schneidscheibenpaar der in Figur 1 dargestellten erfindungsgemäßen Schneidvorrichtung in schematischer Darstellung.

In Figur 1 ist eine erfindungsgemäße Schneidvorrichtung 1 ersichtlich, bei der die Antriebseinheit durch zwei Hydraulikmotoren 2a und 2b realisiert ist. Die Schneidvorrichtung umfasst ferner einen Tragrahmen 3, an dem die Hydraulikmotoren 2a und 2b angeordnet sind. Jeder Hydraulikmotor 2a, 2b ist mit einer Welle 4a bzw. 4b verbunden, wobei die Wellen 4a, 4b derart drehbar an dem Tragrahmen 3 gelagert sind, dass die Drehachsen der beiden Wellen 4a und 4b parallel sind.

Auf den Wellen 4a und 4b ist eine Vielzahl von Paaren von Schneidscheiben angeordnet, von denen in Figur 1 exemplarisch nur das unterste Schneidscheibenpaar einer ersten Schneidscheibe 5a und einer zweiten Schneidscheibe 5b explizit gekennzeichnet ist.

Der Tragrahmen 3 ist an einem Mast 6 befestigt, welcher über eine Befestigungsvorrichtung 7 mit einem Traktor 8 verbunden ist.

Der Mast 6 ist an der Befestigungsvorrichtung 7 schwenkbar gelagert und kann mittels eines Druckzylinders selektiv verschwenkt werden. Weiterhin ist der Mast 6 mittels eines weiteren Druckzylinders gegenüber der Befestigungsvorrichtung ausfahrbar, sodass der Tragrahmen 3 in einer vorgebbaren Höhe gegenüber der Befestigungsvorrichtung 7 angeordnet werden kann und somit die Schnitthöhe insbesondere des untersten Schneidscheibenpaares 5a, 5b vorgebbar ist.

Die Wellen 4a, 4b sind derart angeordnet, dass sie in einer Ebene senkrecht zur Fahrtrichtung des Traktors 8 im Geradeauslauf liegen. Diese Fahrtrichtung im Geradeauslauf zeigt in Figur 1 senkrecht aus der Zeichenebene heraus.

Hierdurch sind die Schneidscheibe 5a und alle auf der Welle 4a angeordneten Schneidscheiben weiter vom Traktor 8 entfernt als die Schneidscheibe 5b und alle auf der Welle 4b angeordneten Schneidscheiben. Bei Benutzung wird die erfindungsgemäße Schneidvorrichtung 1 mittels des Traktors an einer nicht gezeigten Rebzeile entlang geführt, wobei die Rebzeile zwischen den Wellen 4a und 4b und somit zwischen den Schneidscheiben hindurchläuft.

Die in Figur 1 dargestellte Schneidvorrichtung ist derart ausgeführt, dass der Hydraulikmotor 2a eine höhere Drehgeschwindigkeit der Welle 4a erzeugt, als der Hydraulikmotor 2b bei der Welle 4b. Da die Schneidscheiben auf den Wellen 4a und 4b identische Durchmesser besitzen, weisen die Schneidscheiben der Welle 4a somit eine höhere Umfangsgeschwindigkeit auf als die Schneidscheiben der Welle 4b.

Dies führt unter anderem dazu, dass abgeschnittene Pflanzenteile in Figur 1 hauptsächlich nach links ausgegeben werden, d. h. auf der von dem Traktor 8 abgewandten Seite der Rebzeile, sodass die abgeschnittenen Teile nicht mit dem Mast 6, der Befestigungsvorrichtung 7 oder dem Traktor 8 kollidieren und dem Benutzer auf dem Traktor 8 auch nicht die Sicht erschweren.

Wie in Figur 1 ersichtlich, ist der Abstand der Wellen 4a und 4b und der Durchmesser der Schneidscheiben 5a, 5b derart gewählt, dass die Schneidscheiben 5a, 5b überlappen. Um dies zu ermöglichen, sind die Schneidscheiben 5a, 5b eines Schneidscheibenpaares jeweils höhenversetzt. Der Höhenversatz ist derart gewählt, dass in dem in Figur 1 mit A bezeichneten Überlappungsbereich die Schneidscheiben 5a und 5b einen Höhenabstand von etwa 2 bis 3 Millimetern aufweisen.

Die restlichen Schneidscheibenpaare sind hingegen derart höhenversetzt angeordnet, dass im Überlappungsbereich ein Abstand von 5 bis 7 Millimetern vorliegt. Dies hat folgenden Hintergrund: Das unterste Schneidscheibenpaar 5a und 5b ist für den Schnitt der Pflanze, wie beispielsweise der Rebe verantwortlich, und somit auch für die Schnittfläche an der verbleibenden Pflanze. Diese Schnittfläche soll möglichst glatt sein und es sollen möglichst geringe Verletzungen an der Pflanze auftreten. Daher wird bei dem untersten Schneidscheibenpaar ein geringerer Höhenabstand gewählt. Die restlichen Schneidscheibenpaare dienen hingegen dazu, die abgeschnittenen Pflanzenteile zu zerkleinern und auszuwerfen. Hier muss keine glatte Schnittfläche garantiert werden, vielmehr ist ein Zerfastern dieser Pflanzenteile sogar hilfreich, da es ein zügigeres Zersetzen der Pflanzen bewirkt.

Dementsprechend ist bei diesen Schneidscheibenpaaren ein größerer Höhenabstand gewählt.

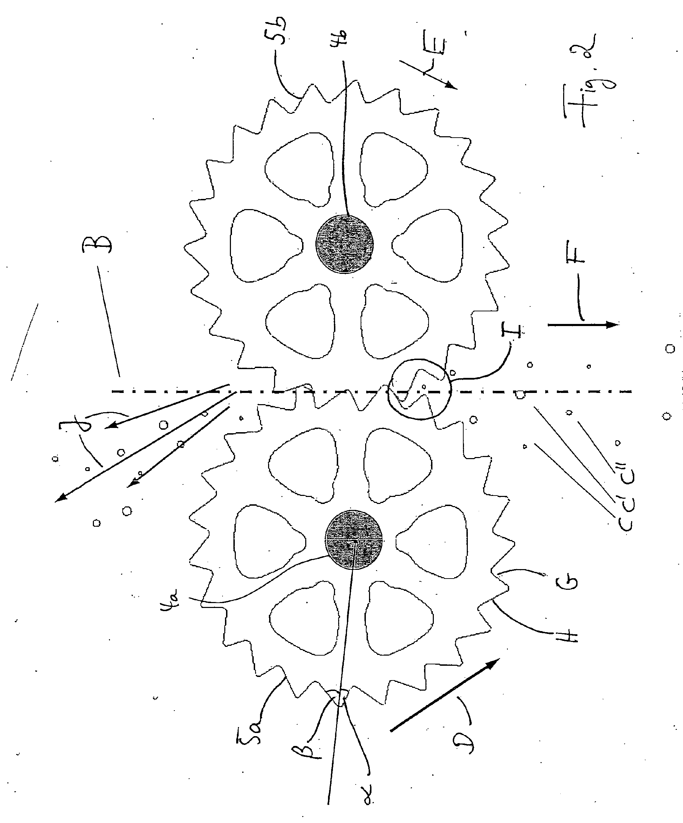

In Figur 2 ist eine Draufsicht von oben auf das unterste Schneidscheibenpaar 5a, 5b aus Figur 1 dargestellt. Die mittlere gestrichelte Linie B stellt schematisch die Mittellinie der zu bearbeitenden Rebzeile dar, wohingegen einzelne Äste und Stängel der zu schneidenden Rebe als Kreise dargestellt sind (siehe exemplarisch die Kreise C, C', C").

Die Pfeile D und E geben die Drehrichtung der Schneidscheiben 5a und 5b an, d. h. die Schneidscheiben 5a, 5b besitzen gegenläufige Drehrichtungen, wobei sich die Schneidscheibe 5a mit einer höheren Drehgeschwindigkeit als die Schneidscheibe 5b dreht, was durch die Länge der Pfeile D, E symbolisiert ist.

Der Pfeil F gibt schließlich die Fahrtrichtung des Traktors 8 und damit auch die Bearbeitungsrichtung bezüglich der Rebzeile an.

Wie in Figur 2 ersichtlich, besitzen die Schneidscheiben der in Figur 1 dargestellten Schneidvorrichtung und damit auch die Schneidscheiben 5a und 5b Zähne, welche eine Flanke mit einem flachen Anstiegswinkel und eine Flanke mit einem demgegenüber steileren Anstiegswinkel aufweisen. Exemplarisch ist bei der Schneidscheibe 5a eine Flanke G mit einem steilen Anstiegswinkel α und eine Flanke H mit einem flachen Anstiegswinkel β gekennzeichnet.

Die Anstiegswinkel α, β sind derart gewählt, dass der Winkel α gegenüber einer gedachten Linie, welche durch den Mittelpunkt der Schneidscheibe 5a und die äußere Spitze eines Zahnes entlang eines Halbmessers verläuft, etwa 22° beträgt. Der flache Anstiegswinkel ist derart gewählt, dass ein entsprechender Winkel β gegenüber der gedachten Linie etwa 45° beträgt.

Die Schneidscheibe 5a ist dabei derart angeordnet, dass die Flanke G mit dem steilen Anstiegswinkel in Drehrichtung vorne liegt. Die Schneidscheibe 5b ist identisch ausgeführt, jedoch umgekehrt angeordnet, sodass die Flanken der Sägezähne mit steilem Anstiegswinkel ebenfalls in Drehrichtung vorne liegen.

Weiterhin ist die Drehgeschwindigkeit der Welle 4b derart gewählt, dass die Umfangsgeschwindigkeit der auf dieser Welle angeordneten Schneidscheiben und damit auch die Umfangsgeschwindigkeit der Schneidscheibe 5b in etwa der Fahrgeschwindigkeit des Traktors 8 gemäß der Richtung F in Figur 2 entspricht. Dies bedeutet, dass an dem in Figur 2 mit I gekennzeichneten Schnittbereich der Umfang der Schneidscheibe 5b bezüglich der abzuschneidenden Pflanzenteile keine oder nahezu keine Relativgeschwindigkeit besitzt, sondern dass dort lediglich ein Andrücken der Pflanzenteile durch die Schneidscheibe 5b an die Schneidscheibe 5a erfolgt.

Die Schneidscheibe 5a dreht sich demgegenüber mit einer höheren Drehgeschwindigkeit, sodass die Pflanzenteile im Schnittbereich I im Wesentlichen durch die steilen Flanken G der Zähne der Schneidscheibe 5a abgeschlagen oder abgeschnitten werden. Die erhöhte Drehgeschwindigkeit der Schneidscheibe 5a führt weiterhin dazu, dass die abgeschnittenen Pflanzenteile in Figur 2 hauptsächlich nach links gemäß der Pfeile J ausgegeben werden, d. h. auf die von dem Traktor 8 abgewandte Seite der Rebzeile.

## Patentansprüche

1. Schneidvorrichtung (1) zum Schneiden von Pflanzen, insbesondere zum Vorschnitt von Reben in Drahtrahmenanlagen mit Kordon- oder Guyoterziehung, umfassend mindestens eine Antriebseinheit, einen Tragrahmen (3) und mindestens ein Paar von Schneidscheiben (5a, 5b) mit einer ersten und einer zweiten Schneidscheibe, wobei die Schneidscheiben (5a, 5b) derart drehbar an dem Tragrahmen (3) angeordnet sind, dass die Drehachsen der beiden Schneidscheiben (5a, 5b) in etwa parallel sind, und wobei die Antriebseinheit mit den Schneidscheiben (5a, 5b) derart in Wirkverbindung steht, dass die Schneidscheiben (5a, 5b) mittels der Antriebseinheit drehbar sind,
**dadurch gekennzeichnet,**
**dass** Umfang und/oder Drehgeschwindigkeit der beiden Schneidscheiben (5a, 5b) derart gewählt sind, dass die erste Schneidscheibe (5a) eine unterschiedliche Umfangsgeschwindigkeit zur Umfangsgeschwindigkeit der zweiten Schneidscheibe (5b) aufweist.

2. Schneidvorrichtung (1) nach Anspruch 1,
**dadurch gekennzeichnet,**
**dass** beide Schneidscheiben (5a, 5b) in etwa den gleichen Durchmesser besitzen und dass die Antriebseinheit derart mit den Schneidscheiben (5a, 5b) zusammenwirkend ausgestaltet ist, dass die erste Schneidscheibe (5a) mit einer ersten Drehgeschwindigkeit und die zweite Schneidscheibe (5b) mit einer zweiten Drehgeschwindigkeit drehbar ist, wobei die erste Drehgeschwindigkeit und die zweite Drehgeschwindigkeit unterschiedlich sind.

3. Schneidvorrichtung (1) nach mindestens einem der vorangegangenen Ansprüche,
**dadurch gekennzeichnet,**
**dass** die zweite Drehgeschwindigkeit mindestens um einen Faktor 1,5, insbesondere mindestens um einen Faktor 2, im Weiteren insbesondere mindestens um einen Faktor 3 größer als die erste Drehgeschwindigkeit ist.

4. Schneidvorrichtung (1) nach mindestens einem der vorangegangenen Ansprüche,
**dadurch gekennzeichnet,**
**dass** sich die Schneidscheiben (5a, 5b) gegenläufig zueinander drehen.

5. Schneidvorrichtung (1) nach mindestens einem der vorangegangenen Ansprüche,
**dadurch gekennzeichnet,**
**dass** die Schneidscheiben (5a, 5b) derart an dem Tragrahmen (3) angeordnet sind, dass sie in Richtung der Drehachsen zueinander höhenversetzt sind und dass sie einander in Draufsicht von oben, d.h. in Richtung der Drehachsen überlappen.

6. Schneidvorrichtung (1) nach mindestens einem der vorangegangenen Ansprüche,
**dadurch gekennzeichnet,**
**dass** die Antriebseinheit einen Hydraulikmotor, welcher mit beiden Schneidscheiben (5a, 5b) des Paares von Schneidscheiben (5a, 5b) in Wirkverbindung steht, und ein Getriebe umfasst, wobei das Getriebe zwischen den Hydraulikmotor und eine der beiden Schneidscheiben (5a, 5b) zwischengeschaltet ist.

7. Schneidvorrichtung (1) nach mindestens einem der vorangegangenen Ansprüche,
**dadurch gekennzeichnet,**
**dass** die Antriebseinheit mindestens zwei Hydraulikmotoren (2a, 2b) umfasst, wobei ein erster Hydraulikmotor mit der ersten Schneidscheibe (5a) und ein zweiter Hydraulikmotor mit der zweiten Schneidscheibe (5b) in Wirkverbindung steht.

8. Schneidvorrichtung (1) nach mindestens einem der vorangegangenen Ansprüche,
**dadurch gekennzeichnet,**
**dass** die Schneidvorrichtung (1) mindestens ein zweites Paar Schneidscheiben mit einer dritten und einer vierten Schneidscheibe umfasst, welche derart drehbar an dem Tragrahmen (3) angeordnet sind, dass die Drehachsen der ersten (5a) und der dritten Scheidscheibe in etwa identisch sind und dass die Drehachsen der zweiten (5b) und der vierten Scheidscheibe in etwa identisch sind.

9. Schneidvorrichtung (1) nach Anspruch 8,
**dadurch gekennzeichnet,**
**dass** die Schneidvorrichtung (1) zwei Wellen (4a, 4b) umfasst, welche parallel zueinander und drehbar an dem Tragrahmen (3) angeordnet sind,
**dass** die erste (5a) und die dritte Schneidscheibe an einer ersten Welle (4a) und die zweite (5b) und die vierte Schneidscheibe an einer zweiten Welle (4b) angeordnet sind und
**dass** die Antriebseinheit mit den Wellen (4a, 4b) derart in Wirkverbindung steht, dass die Wellen (4a, 4b) durch die Antriebseinheit drehbar sind, wobei die erste Welle (4a) eine zu der zweiten Welle (4b) unterschiedliche Drehgeschwindigkeit aufweist.

10. Schneidvorrichtung (1) nach mindestens einem der vorangegangenen Ansprüche,
**dadurch gekennzeichnet,**
**dass** die Schneidvorrichtung (1) weiterhin einen Mast (6), eine Hubvorrichtung und eine Befestigungsvorrichtung (7) aufweist, wobei die Befestigungsvorrichtung (7) zum Anbringen an einem Fahrzeug, insbesondere einem Traktor (8), geeignet ist, und wobei der Mast (6) mit der Befestigungsvorrichtung (7) verbunden und der Tragrahmen (3) derart an dem Mast (6) befestigt ist, dass der Tragrahmen (3) mittels der Hubvorrichtung relativ zur Befestigungsvorrichtung (7) hoch- und herunterfahrbar ist.

11. Schneidvorrichtung (1) nach Anspruch 9 oder 10,
**dadurch gekennzeichnet,**
**dass** die Schneidscheiben (5a, 5b) derart an dem Tragrahmen (3) angeordnet sind, dass bei an einem Fahrzeug angeordneter Befestigungsvorrichtung (7) die Drehachsen der Schneidscheiben (5a, 5b) in etwa in einer Ebene liegen, welche senkrecht zum Geradeauslauf des Fahrzeugs steht und
**dass** die Schneidscheibe (5b), welche näher an dem Fahrzeug angeordnet ist, eine geringere Drehgeschwindigkeit aufweist als die andere, weiter vom Fahrzeug entfernt angeordnete Schneidscheibe (5a).

12. Schneidvorrichtung (1) nach Anspruch 11,
**dadurch gekennzeichnet,**
**dass** bei der die Schneidscheibe (5b), welche näher an dem Fahrzeug angeordnet ist, die Drehgeschwindigkeit derart gewählt ist, dass die Umfangsgeschwindigkeit dieser Schneidscheibe (5b) in etwa der Fahrgeschwindigkeit des Fahrzeugs entspricht.

13. Schneidvorrichtung (1) nach mindestens einem der vorangegangenen Ansprüche,
**dadurch gekennzeichnet,**
**dass** die erste (5a) und die zweite Schneidscheibe (5b) jeweils an ihrem Umfang Schneidzähne aufweisen, insbesondere,
**dass** die Schneidzähne asymmetrisch ausgebildet sind, derart, dass jeder Schneidzahn eine erste Flanke (H) mit einem flachen Anstiegswinkel (β) und eine zweite Flanke (G) mit einem demgegenüber steileren Anstiegswinkel (α) aufweist.

14. Schneidvorrichtung (1) nach Anspruch 13,
**dadurch gekennzeichnet,**
**dass** die Schneidscheibe (5a), welche sich mit der höheren Drehgeschwindigkeit dreht, derart an dem Tragrahmen (3) angeordnet ist, dass bei jedem Schneidzahn die Flanke (G) mit dem steileren Anstiegswinkel (α) in Drehrichtung liegt und die Flanke (H) mit dem flachen Anstiegswinkel (β) entgegengesetzt zur Drehrichtung liegt und/oder
**dass** die Schneidscheibe (5b), welche sich mit der geringeren Drehgeschwindigkeit dreht, derart an dem Tragrahmen (3) angeordnet ist, dass bei jedem Schneidzahn die Flanke mit dem steileren Anstiegswinkel in Drehrichtung liegt und die Flanke mit dem flachen Anstiegswinkel entgegengesetzt zur Drehrichtung liegt.

15. Schneidvorrichtung (1) nach mindestens einem der Ansprüche 13 bis 14,
**dadurch gekennzeichnet,**
**dass** die steilere Flanke (G) jedes Schneidzahnes einen Winkel (α) von 15° bis 25° gegenüber einer gedachten Linie aufweist, welche durch den Mittelpunkt der Schneidscheibe (5a, 5b) und die äußere Spitze des Schneidzahnes verläuft, wobei dieser Winkel insbesondere etwa 22° beträgt und/oder
**dass** die flache Flanke (H) jedes Schneidzahnes einen Winkel (β) von 40° bis 50° gegenüber einer gedachten Linie aufweist, welche durch den Mittelpunkt der Schneidscheibe (5a, 5b) und die äußere Spitze des Schneidzahnes verläuft, wobei dieser Winkel insbesondere etwa 45° beträgt.
